# EUROPEAN PATENT APPLICATION

(11) **EP 2 582 035 A2**
(43) Date of publication of application: **17.04.2013**
(21) Application number: 12150377.5
(22) Date of filing: 06.01.2012
(51) Int. Cl.: H02P 8/14, H02P 23/00, G03G 15/00

(54) **Image forming apparatus, motor controlling apparatus, method for controlling motor**

(30) Priority: 11.07.2011 KR 20110068508
(71) Applicant: Samsung Electronics Co., Ltd., Suwon-si, Gyeonggi-do, 443-742 (KR)
(72) Inventor: Kim, Gun-ho, Seoul (KR); Lee, Duk-young, Gyeonggi-do (KR)
(74) Representative: Hewett, Jonathan Michael Richard

(57) **Abstract**

An image forming apparatus includes an engine unit which is used to perform an image forming job; a controller which controls an operation of the engine unit; a step motor which operates the engine unit; a storage unit which stores an acceleration table including pulse per second (PPS) information of each of driving speeds of the step motor; and a driving controller which generates a driving signal of the step motor according to a control command of the step motor which is received from the controller. The driving controller generates the driving signal by using PPS information corresponding to a speed change section of the acceleration table corresponding to the control command.

## Description

The present invention relates to an image forming apparatus, a motor controlling apparatus, and a method for controlling a motor, and more particularly, to an image forming apparatus which can control a step motor by using one acceleration table, a motor controlling apparatus, and a method for controlling a motor.

An image forming apparatus is an apparatus which generates, prints, receives, and transmits image data. Representative examples of the image forming apparatus include a printer, a copier, a fax machine, a multifunction peripheral (MFP) having their combined functions, etc.

The image forming apparatus uses motors which are to perform various functions, such as functions of moving a printing paper, feeding the printing paper, etc. Option units, which perform various functions, such as auto document feeder (ADF) unit, a finisher unit, a high capacity feeder (HCF) unit, and a double capacity feeder (DCF) unit, are attached to the image forming apparatus. Therefore, the number of motors which may be used in the image forming apparatus has gradually increased.

The image forming apparatus uses a step motor (or a pulse motor or a stepping motor) to precisely control a movement of a printing paper, etc. The step motor is a motor which moves at each fixed angle according to the number of input pulses. Since a rotation angle of the motor is completely proportional to the number of input pulses, the rotation angle may be precisely controlled.

The step motor controls an acceleration or a deceleration to prevent a step-out and thus uses acceleration tables. The acceleration tables are stored in an external memory (read only memory (ROM)) according to types and speeds of motors. An acceleration table necessary for driving the motor is downloaded to a memory device of a motor controlling apparatus such as a static random access memory (SRAM).

However, different acceleration tables are used according to speeds of motors. Therefore, if a speed mode of the step motor is changed, a process of re-downloading an acceleration table corresponding to the changed speed mode is required. Since the acceleration table is re-downloaded whenever the speed mode is changed as described above, problems, such as a time delay, a performance deterioration, etc., occur.

Also, since different acceleration tables are used according to types of step motors, a memory space, which stores acceleration tables, is additionally consumed by the number of motors. Therefore, a memory waste occurs.

One or more exemplary embodiments of the present invention provide an image forming apparatus which can control a step motor by using one acceleration table, a motor controlling apparatus, and a method for controlling a motor.

According to an aspect of the present invention, there is provided an image forming apparatus. The image forming apparatus may include: an engine unit which is used to perform an image forming job; a controller which controls an operation of the engine unit; a step motor which operates the engine unit; a storage unit which stores an acceleration table which includes pulse per second (PPS) information with respect to each of driving speeds of the step motor; and a driving controller which generates a driving signal of the step motor according to a control command of the step motor which is received from the controller, wherein the driving controller generates the driving signal by using PPS information corresponding to a speed change section of the acceleration table corresponding to the control command.

The driving controller may determine a start speed and an end speed corresponding to the speed change section of the step motor and generate the driving signal by sequentially using PPS information from PPS information corresponding to the start speed to PPS information corresponding to the end speed.

The driving controller may generate the driving signal by repeatedly using the each of the PPS information within the start and end speeds by the preset number of times.

The acceleration table may include a plurality of table indexes and a plurality of pieces of PPS information which respectively match with the plurality of table indexes. The plurality of pieces of PPS information may increase or decrease at a preset speed according to the table indexes.

The acceleration table may include a plurality of table indexes and a plurality of pieces of PPS information which respectively match with the plurality of table indexes. The acceleration table may include a first table section in which the plurality of pieces of PPS information uniformly increase or decrease at a preset first speed according to the table indexes and a second table section in which the plurality of pieces of PPS information uniformly increase or decrease at a preset second speed according to the table indexes.

The driving controller may generate the driving signal by using the PPS information of the section table section when the step motor initially and lastly accelerates.

A plurality of step motors may be included. The driving controller may generate driving signals of the plurality of step motors.

The acceleration table may include a plurality of table indexes and a plurality of pieces of PPS information which respectively match with the plurality of table indexes. The acceleration table may include a first table section in which the plurality of pieces of PPS information uniformly increase or decrease at a preset first speed according to the table indexes, a second table section in which the plurality of pieces of PPS information uniformly increase or decrease at a preset second speed according to the table indexes, and a third table section in which PPS information corresponding to a preset driving speed is recorded.

The image forming apparatus may further include: a brushless direct current (BLDC) motor; and a DC motor. The driving controller may generate driving signals of the plurality of step motors and control at least one of the BLDC motor and the DC motor.

The driving controller may include a second storage unit which reads and stores a speed table of the storage unit.

According to another aspect of the present invention, there is provided a method for controlling a step motor. The method may include: receiving a control command of the step motor; generating a driving signal of the step motor according to the control command; and providing the generated driving signal to the step motor, wherein the driving signal is generated by using PPS information corresponding to a speed change section of an acceleration table comprising PPS information of each driving speed of the step motor, wherein the speed change section corresponds to the control command.

A start speed and an end speed corresponding to the speed change section of the step motor may be determined to generate the driving signal by sequentially using PPS information from PPS information corresponding to the start speed to PPS information corresponding to the end speed.

The driving signal may be generated by repeatedly using each of PPS information within the start and end speeds by the preset number of times.

The acceleration table may include a plurality of table indexes and a plurality of pieces of PPS information which respectively match with the plurality of table indexes. The plurality of pieces of PPS information may increase or decrease at a preset speed according to the table indexes.

The acceleration table may include a plurality of table indexes and a plurality of pieces of PPS information which respectively match with the plurality of table indexes. The acceleration table may include a first table section in which the plurality of pieces of PPS information uniformly increase or decrease at a preset first speed according to the table indexes and a second table section in which the plurality of pieces of PPS information uniformly increase or decrease at a preset second speed according to the table indexes.

The driving signal may be generated by using PPS information of the second table section when the step motor initially and lastly accelerates.

Driving signals of a plurality of step motors may be generated by using the one acceleration table.

The acceleration table may include a plurality of table indexes and a plurality of pieces of PPS information which respectively match with the plurality of table indexes. The acceleration table may include a first table section in which the plurality of pieces of PPS information uniformly increase or decrease at a preset first speed according to the table indexes, a second table section in which the plurality of pieces of PPS information uniformly increase or decrease at a preset second speed according to the table indexes, and a third table section in which PPS information corresponding to a preset driving speed is recorded.

A driving signal of at least one of a BLDC motor and a DC motor may be generated with generating the driving signals of the plurality of step motors.

According to another aspect of the present invention, there is provided a motor controlling apparatus. The motor controlling apparatus may include: a step motor; an input unit which receives a control command of the step motor; a storage unit which stores an acceleration table comprising PPS information of each driving speed of the step motor; and a driving controller which generates a driving signal of the step motor according to the received control command, wherein the driving controller generates the driving signal by using PPS information corresponding to a speed change section of the acceleration table corresponding to the control command.

Additional aspects and advantages of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a block diagram illustrating a structure of an image forming apparatus according to an exemplary embodiment;
FIG. 2 is a block diagram illustrating a detailed structure of a motor controlling apparatus of FIG. 1;
FIG. 3 is a view illustrating an acceleration table according to an exemplary embodiment;
FIGS. 4 through 6F are views illustrating an operation of a driving controller of FIG. 2;
FIG. 7 is a view illustrating an acceleration table according to another exemplary embodiment;
FIG. 8 is a view illustrating tables of an initial acceleration area, a last acceleration area, and a particular speed area of FIG. 7, according to an exemplary embodiment;
FIG. 9 is a block diagram illustrating an image forming apparatus according to another exemplary embodiment; and
FIG. 10 is a flowchart illustrating a method for controlling a motor according to an exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

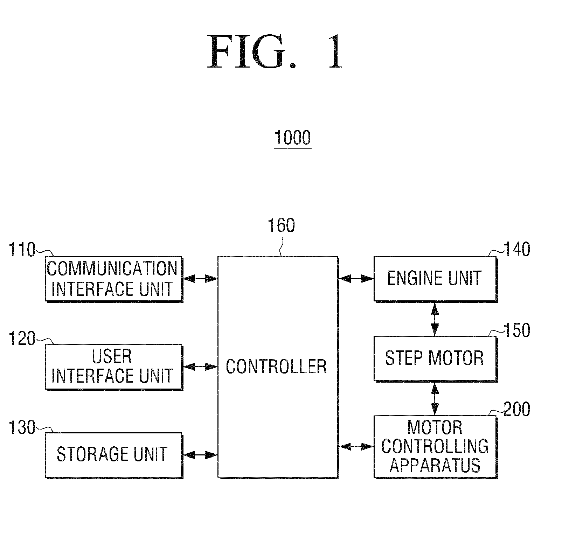

FIG. 1 is a block diagram illustrating a structure of an image forming apparatus 1000 according to an exemplary embodiment.

Referring to FIG. 1, the image forming apparatus 1000 includes a communication interface unit 110, a user interface unit 120, a storage unit 130, an engine unit 140, a step motor 150, a controller 160, and a motor controlling apparatus 200. Here, the image forming apparatus 1000 is an apparatus which generates, prints, receives, and transmits image data and may be a printer, a copier, a fax machine, or a multifunction peripheral (MFP) having their combined functions. It will be described that the present exemplary embodiment is applied to an image forming apparatus which forms an image. However, the present exemplary embodiment may also be applied to an image reading apparatus such as a scanner.

The communication interface unit 110 is connected to a printing controlling terminal (not shown) such as a personal computer (PC), a notebook PC, a personal digital assistant (PDA), a digital camera, or the like. In more detail, the communication interface unit 110 may be formed to connect the image forming apparatus 1000 to an external device and may be connected to the printing controlling terminal through a local area network (LAN) and the Internet or through a universal serial bus (USB) port. The communication interface unit 110 may also be realized to be connected to the printing controlling terminal by using a wire or wireless method. The communication interface unit 110 receives printing data from the printing controlling terminal.

The user interface unit 120 includes a plurality of function keys, which are used by a user to set or select various functions supported by the image forming apparatus 1000, and displays various types of information provided by the image forming apparatus 1000. The user interface unit 120 may be realized as a device which simultaneously realizes an input and an output, such as a touch pad or as a device into which a mouse and a monitor are combined. The user may control a printing operation of the image forming apparatus 1000 by using a user interface window which is provided through the user interface unit 120.

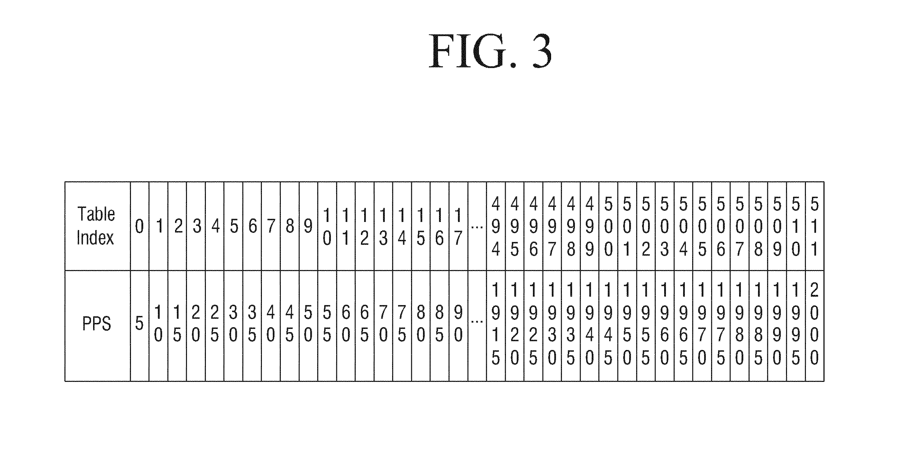

The storage unit 130 stores the printing data. In more detail, the storage unit 130 stores the printing data which is received through the communication interface unit 110. The storage unit 130 also stores an acceleration table. The storage unit 130 may be realized as a storage medium of the image forming apparatus 1000 or an external storage medium, e.g., a removable disk including a USB memory, a web server through a network, or the like. Here, the acceleration table is a table which includes pulse per second (PPS) information according to driving speeds of a step motor. A detailed structure of the acceleration table will be described later with reference to FIGS. 3, 7, and 8.

The engine unit 140 performs an image forming job. In more detail, the engine unit 140 may perform the image forming job according to a control of the controller 160 and a movement of the step motor 150. In the present exemplary embodiment, the engine unit 140 performs only the image forming job. However, if the image forming apparatus 1000 is a scanner or a MFP which performs a scanning operation, the engine unit 140 may perform an image reading job.

The step motor 150 is installed in the image forming apparatus 1000, receives pulse inputs and power, and performs constant acceleration driving or acceleration driving according to the received pulse inputs. The step motor 150 may perform normal direction driving or reverse direction driving according orders of phases of the pulse inputs. Here, the step motor 150 may be a motor which performs various functions of the image forming apparatus 1000 such as functions of driving an OPC or a fuser, transferring a printing paper, etc.

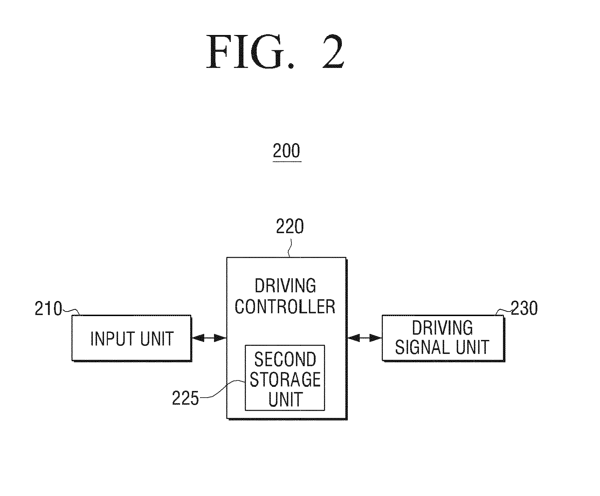

The motor controlling apparatus 200 generates a driving signal of the step motor 150 according to a control command. Detailed structure and operation of the motor controlling apparatus 200 will be described later with reference to FIG. 2.

The controller 160 controls elements of the image forming apparatus 1000. In more detail, if the controller 160 receives the printing data from the printing controlling terminal, the controller 160 controls an operation of the engine unit 140 to print the printing data and transmits the control command of the step motor 150, which is to operate the engine unit 140, to the motor controlling apparatus 200. For example, the controller 160 may transmit a control command of a rotation start/stop of the step motor 150, an acceleration/deceleration of the step motor 150, a speed command value of the step motor 150, etc., to the motor controlling apparatus 200.

FIG. 2 is a block diagram illustrating a detailed structure of the motor controlling apparatus 200 of FIG. 1.

Referring to FIG. 2, the motor controlling apparatus 200 includes an input unit 210, a driving controller 220, and a driving signal unit 230.

The input unit 210 receives the control command of the step motor 150. In more detail, the input unit 210 may receive the control command of the step motor 150 from the controller 160. Here, the control command may include a control command of the rotation start/stop of the step motor 150, the acceleration/deceleration of the step motor 150, the speed command value of the step motor 150, etc.

The control command may be received from the controller 160 through a serial peripheral interface (SPI) which is to exchange data through a serial communication between two apparatuses and a serial communication interface of a bidirectional serial bus I2C.

The input unit 210 receives the acceleration table. In more detail, the input unit 210 may receive the acceleration table which is stored in the storage unit 130. Here, the input unit 210 may request the acceleration table from the controller 160 to receive the acceleration table from the controller 160 or may directly access the storage unit 130 to receive the acceleration table stored in the storage unit 130.

The driving controller 220 may include a further storage unit (also referred to as a "second" storage unit 225) which stores the received acceleration table. The second storage unit 225 is a memory device such as a static random access memory (SRAM) which may store an acceleration table input through the input unit 210. In the present exemplary embodiment, the second storage unit 225 is included in the driving controller 220 but may be realized to be located outside the driving controller 220.

The driving controller 220 generates a driving signal of the step motor 150 according to the control command of the step motor 150. In detail, the driving controller 220 may generate the driving signal by using a plurality of pieces of PPS information of a speed change section of the acceleration table which is stored in the second storage unit 225, wherein the speed change section corresponds to the control command.

In more detail, the driving controller 220 may determine a start speed and an end speed corresponding to a speed change section of the step motor 150 and generate the driving signal by sequentially using the PPS information from the PPS information corresponding to the start speed to the PPS information corresponding to the end speed. As described above, the driving controller 220 determines the speed change section and uses the PPS information of the speed change section. Therefore, although a speed mode of the step motor 150 is changed, the driving controller 220 may change only a section of an original acceleration table without downloading a new acceleration table to generate a driving signal according to the changed speed mode.

The driving signal unit 230 provides the driving signal generated by the driving controller 220 to the step motor 150. In more detail, if the driving controller 220 generates one driving signal of the step motor 150, the driving signal unit 230 may convert the one driving signal into pulse signals respectively corresponding to four phases A, A, B, and B of the step motor 150 and provide the pulse signals to the step motor 150. In the present exemplary embodiment, the driving controller 220 and the driving signal unit 230 are separately installed. However, a function of the driving signal unit 230 may be included in the driving controller 220 so that the driving controller 220 directly generates pulse signals respectively corresponding to phases of the step motor 150 and transmit the pulse signals to the step motor 150.

As described above, the motor controlling apparatus 200 may control the step motor 150 by using one acceleration table. Even if a speed of the step motor 150 is to be changed, the motor controlling apparatus 200 does not need to download an additional acceleration table. Therefore, a time delay, a performance deterioration, etc. may be prevented. Also, the motor controlling apparatus 200 may be realized as one application-specific integrated circuit (ASIC) chip, and thus an internal circuit of the image forming apparatus 1000 may be further simply realized.

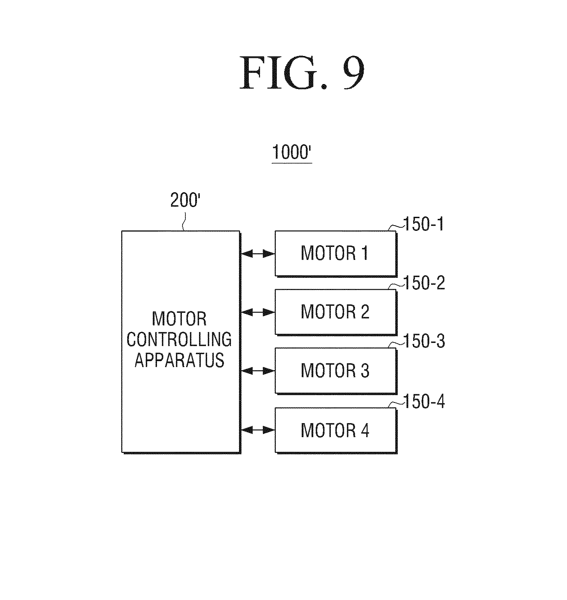

As described with reference to FIG. 2, one motor controlling apparatus 200 controls one step motor. However, as shown in FIG. 9, one motor controlling apparatus 200 may control two or more step motors. The one motor controlling apparatus 200 may control a step motor, a Brushless direct current (DC) electric (BLDC) motor, a DC motor, and the like, and may control different types of motor together.

FIG. 3 is a view illustrating an acceleration table according to an exemplary embodiment.

Referring to FIG. 3, the acceleration table includes a plurality of table indexes and a plurality of pieces of PPS information which respectively match with the plurality of table indexes.

Also, the pieces of PPS information increase by a preset speed according to the table indexes. The present exemplary embodiment describes the acceleration table in which the preset speed increases with increases in the table indexes. However, the present exemplary embodiment may use an acceleration table in which a speed decreases with increases in table indexes.

Also, in the present exemplary embodiment, the pieces of PPS information are stored so as to correspond to the table indexes. However, instead of PPS, time information of the PPS may be stored.

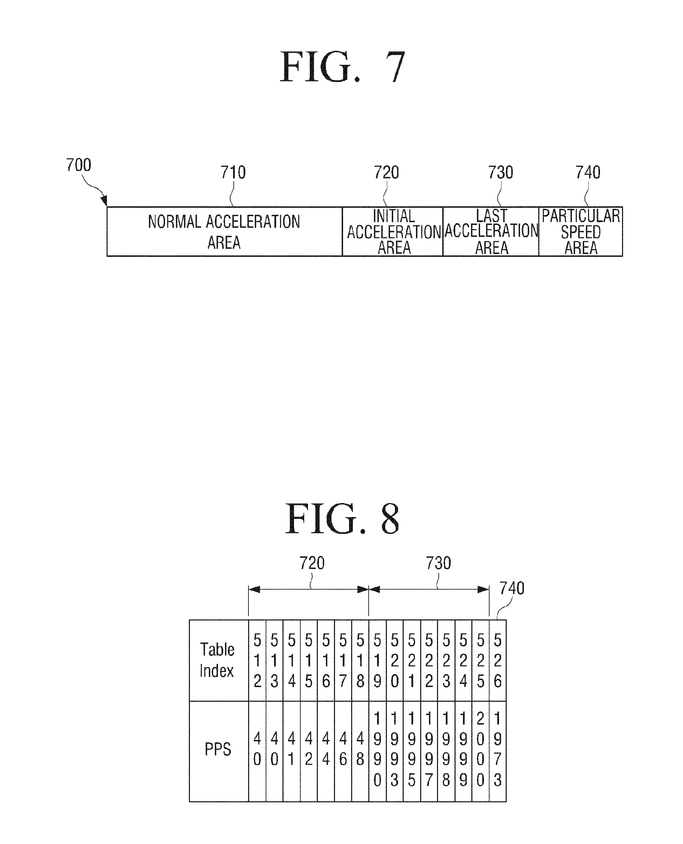

As described with reference to FIG. 3, the acceleration table has one table section in which the preset speed increases with the increases in the table indexes. However, as shown in FIG. 7, an acceleration table may have a plurality of table sections.

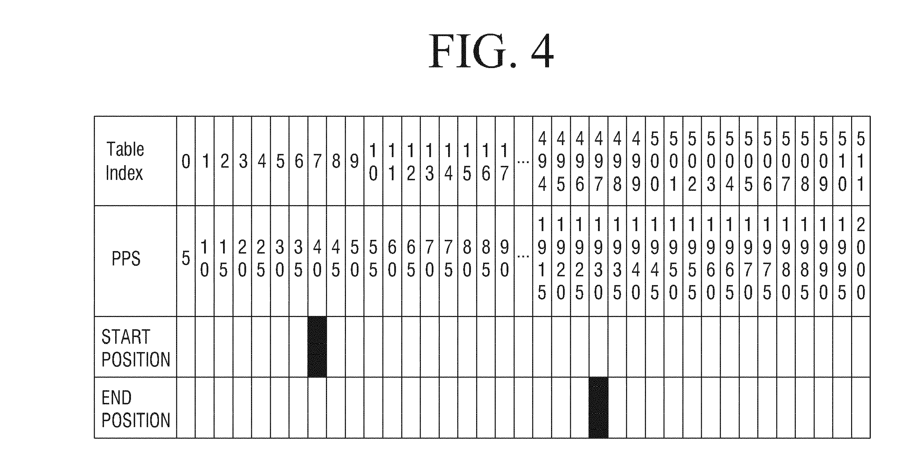

FIGS. 4 through 6F are views illustrating an operation of the driving controller 220 of FIG. 2, according to an exemplary embodiment.

The driving controller 220 determines start and end speeds according to an input control command. For example, referring to FIG. 4, if the control command of the controller 160 is a rotation start command to 1930 PPS, the driving controller 230 may determine a start speed as 0 PPS and an end speed as 1930 PPS. If the step motor 150 operates without stepping out although the step motor 150 receives a driving signal of 40 PPS in a stop state, the driving controller 220 may determine the start speed as 40 PPS as shown in FIG. 4.

If the start and end speeds are determined as described above, the driving controller 220 may generate a driving signal by sequentially using PPS information from PPS information corresponding to the start speed to PPS information corresponding to the end speed. For example, the driving controller 220 may generate a series of driving signals by using PPS information of table indexes in orders of table indexes 7 -> 8 -> 9 -> 10 -> 11 ... 493 -> 494 -> 495 -> 496 -> 497, so that the step motor 150 operates at speeds of 40 PPS -> 45 PPS -> 50 PPS ... 1920 PPS -> 1925 PPS - > 1930 PPS.

The driving controller 220 may generate the driving signals by repeatedly using each of the PPS information within the start and end speeds by the preset number of times. For example, if the preset number of times is three times, the driving controller 220 may generate a series of driving signals by using PPS information of table indexes in orders of table indexes 7 -> 7 -> 7 -> 8 -> 8 -> 8 -> 9 -> 9 -> 9 ...496 -> 496 -> 496 -> 497 -> 497 -> 497, so that the step motor 150 operates at speeds of 40 PPS -> 40 PPS -> 40 PPS -> 45 PPS -> 45 PPS -> 45 PPS -> 50 PPS ... 1925 PPS -> 1925 PPS -> 1925 PPS -> 1930 PPS -> 1930 PPS -> 1930 PPS. If each of the PPS information is repeatedly used by the preset number of times as described above, the step motor 150 may gently accelerate.

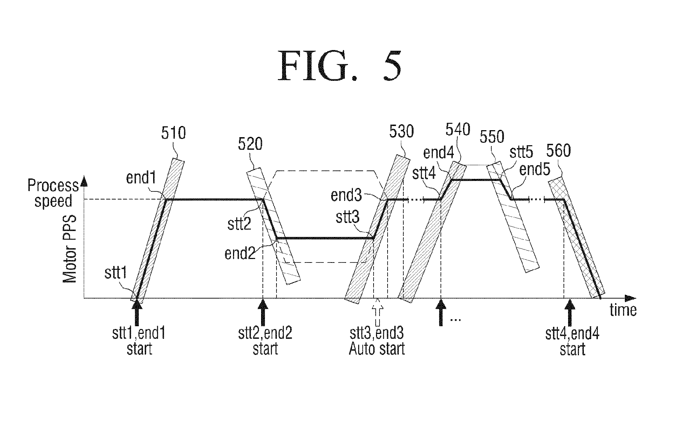

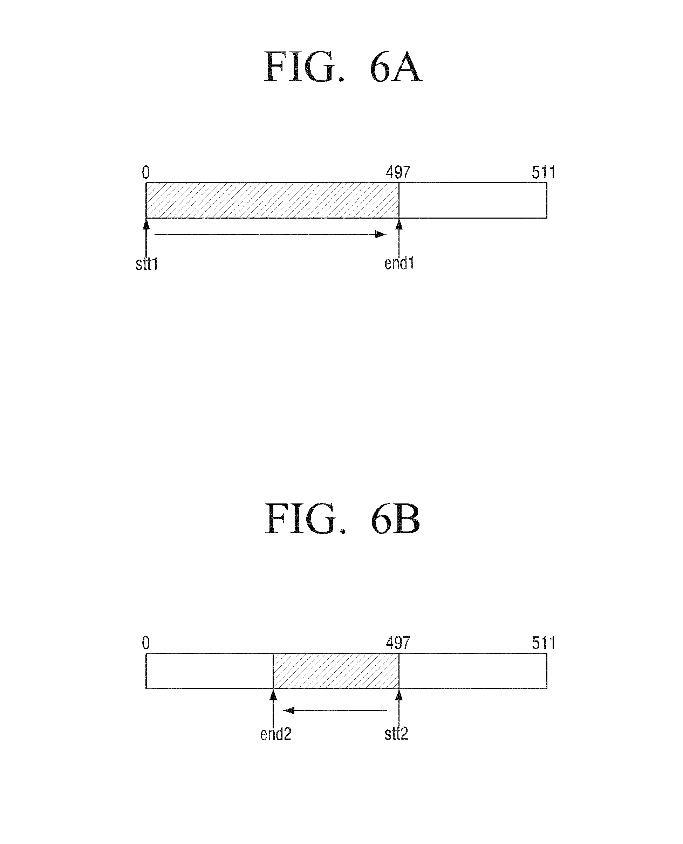

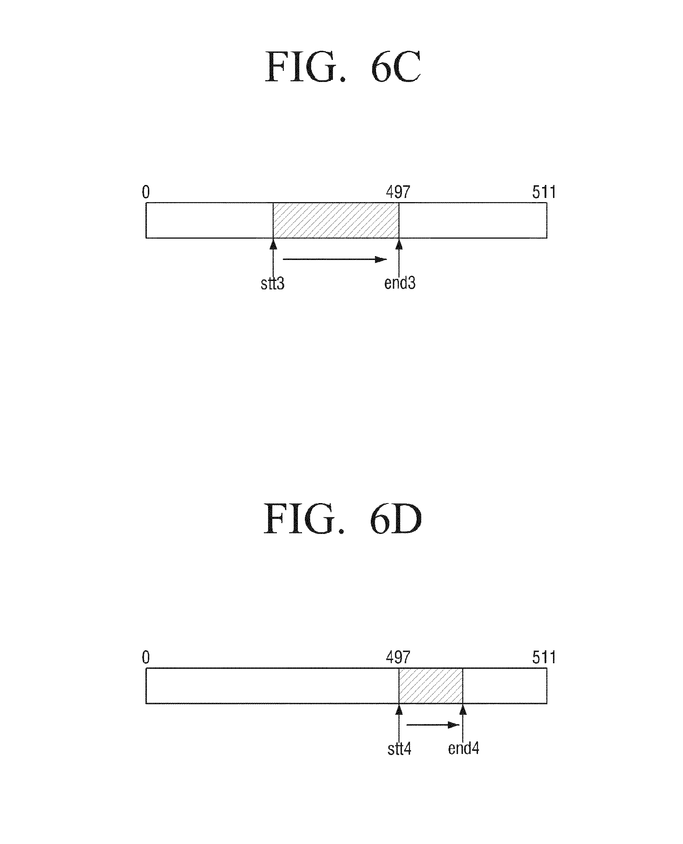

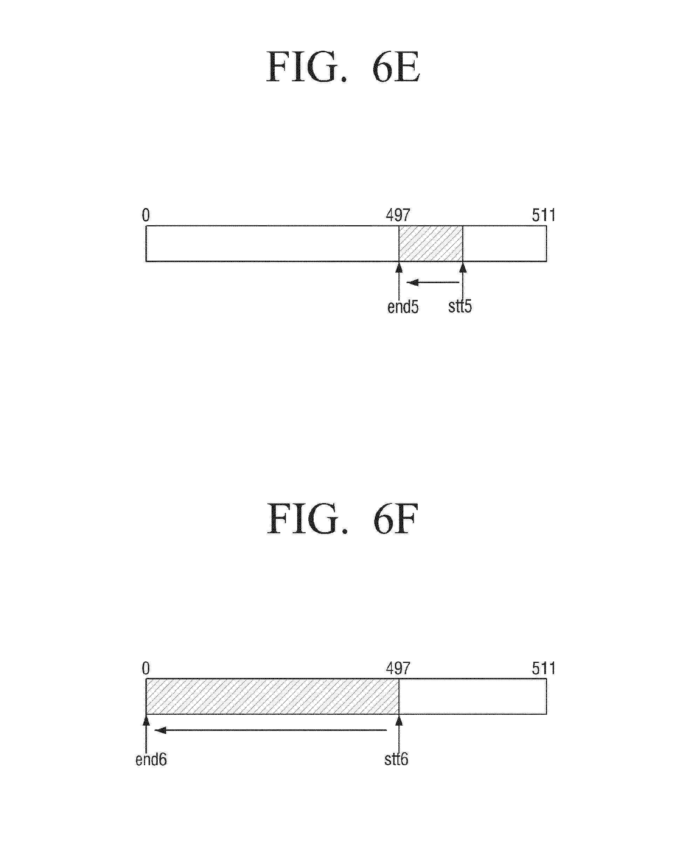

With reference to the above-described contents, the operation of the driving controller 220 according to the changing control command of the controller 160 will now be described with reference to FIGS. 5 and 6.

As shown in FIG. 5, if a rotation start command 510 to a first speed, a deceleration command 520 to a second speed slower than the first speed, an acceleration command 530 to the first speed, an acceleration command 540 to a third speed faster than the first speed, a deceleration command 550 to the first speed, and a rotation stop command 560 are sequentially input from the controller 160, the driving controller 220 may operate as follows according to the rotation start command 510, the deceleration command 520, the acceleration command 530, the acceleration command 540, the deceleration command 550, and the rotation stop command 560.

According to the rotation start command 510 to the first speed, the step motor 150 is to accelerate from speed 0 PPS to speed 1930 PPS. Therefore, as shown in FIG. 6A, the driving controller 220 may generate a driving signal by sequentially using PPS information from table index 0 corresponding to start speed 0 PPS to table index 497 corresponding to end speed 1930 PPS. If the step motor 150 reaches the end speed, the driving controller 220 may generate a driving signal by using the PPS information of the table index 497 so that the step motor 150 maintains the speed 1930 PPS.

According to the deceleration command 520 to the second speed slower than the first speed, the step motor 150 is to decelerate from speed 1930 PPS to speed 1000 PPS. Therefore, as shown in FIG. 6B, the driving controller 220 may generate a driving signal by sequentially using PPS information from table index 497 corresponding to start speed 1930 PPS to table index 199 corresponding to end speed 1000 PPS. If the step motor 150 reaches the end speed, the driving controller 220 may generate a driving signal by using PPS information of the table index 199 so that the step motor 150 maintains the speed 1000 PPS.

According to the acceleration command 530 to the first speed, the step motor 150 is to accelerate from speed 1000 PPS to speed 1930 PPS. Therefore, as shown in FIG. 6C, the driving controller 220 may generate a driving signal by sequentially using PPS information from table index 199 corresponding to start speed 1000 PPS to table index 497 corresponding to end speed 1930 PPS. If the step motor 150 reaches the end speed, the driving controller 220 may generate a driving signal by using PPS information of the table index 497 so that the step motor 150 maintains the speed 1930 PPS.

According to the acceleration command 540 to the third speed faster than the first speed, the step motor 150 is to accelerate from speed 1930 PPS to speed 2000 PPS. Therefore, as shown in FIG. 6D, the driving controller 220 may generate a driving signal by sequentially using PPS information from table index 497 corresponding to start speed 1930 PPS to table index 511 corresponding to end speed 2000 PPS. If the step motor 150 reaches the end speed, the driving controller 220 may generate a driving signal by using PPS information of the table index 511 so that the step motor 150 maintains the speed 2000 PPS.

According to the deceleration command 550 to the first speed, the step motor 150 is to decelerate from speed 2000 PPS to speed 1930 PPS. Therefore, as shown in FIG. 6E, the driving controller 220 may generate a driving signal by sequentially using PPS information from the table index 511 corresponding to start speed 2000 PPS to table index 497 corresponding to end speed 1930 PPS. If the step motor 150 reaches the end speed, the driving controller 220 may generate a driving signal by using PPS information of the table index 497 so that the step motor 150 maintains the speed 1930 PPS.

According to the rotation stop command 560, the step motor 150 is to decelerate from speed 1930 PPS to speed 0 PPS. Therefore, as shown in FIG. 6F, the driving controller 220 may generate a driving signal by sequentially using table index 497 corresponding to start speed 1930 PPS to table index 497 corresponding to end speed 0 PPS.

As described above, the motor controlling apparatus 200 according to the present exemplary embodiment may operate the step motor 150 at various speeds by using one acceleration table.

FIG. 7 is a view illustrating an acceleration table 700 according to another exemplary embodiment.

Referring to FIG. 7, the acceleration table 700 includes a first table section 710, second table sections 720 and 730, and a third table section 740.

The first table section 710 refers to a section in which a plurality of pieces of PPS information uniformly increase or decrease at a preset first speed according to table indexes. In more detail, the first table section 710 is a section in which PPS information as shown in FIG. 3 is recorded.

The second table sections 720 and 730 refer to sections in which a plurality of pieces of PPS information uniformly increase or decrease at a preset second speed according to table indexes. In more detail, the second table sections 720 and 730 include PPS information which increases or decreases at a different speed from the first table section 710. Here, the PPS information may be used when the step motor 150 initially or lastly accelerates. For example, as shown in FIG. 8, the second table section 720 includes PPS information which is recorded so that a speed of the step motor 150 increases like an exponential curve. The second table section 730 includes PPS information which is recorded so that the speed of the step motor 150 increases like a logarithmic curve.

Therefore, the driving controller 220 may generate a driving signal of the step motor 150 by using PPS information of a second table section instead of PPF information of a first table section in initial and last acceleration sections of the step motor 150. For example, if the control command of the controller 160 is an acceleration command to from speed 40 PPS to speed 2000 PPS, the driving controller 220 may generate a series of driving signals by using PPS information of table indexes in order of table indexes 512 -> 513 -> 514 -> 515 -> 516 -> 517 -> 518-> 9 -> 10 -> 11 -> ... 507 -> 508 -> 519 -> 520 -> 521 -> 522 -> 523 -> 524 -> 525, so that the step motor 150 operates at speeds of 40 PPS -> 40 PPS -> 41 PPS -> 42 PPS -> 44 PPS ... 1985 PPS -> 1990 PPS -> 1993 PPS -> 1995 PPS -> 1998 PPS -> 1999 PPS -> 2000 PPS.

In the present exemplary embodiment, a second table section has only PPS information corresponding to initial and last acceleration sections. However, the second table section may have an acceleration section which is not shown in FIG. 8 and corresponds to a start speed and a last acceleration section which is not shown in FIG. 8 and corresponds to an end speed. A second table section having a deceleration section may also be used.

The third table section 740 refers to a section in which PPS information corresponding to a preset driving speed is recorded. In more detail, the third table section 740 refers to a section in which PPS information that correspond to driving speeds of the step motor 150 and that are not recorded in the first and second table sections is recorded.

Therefore, if the driving controller 220 receives a control command of a driving speed corresponding to the third table section 740, the driving controller 220 may generate a driving signal by using the first table section 710 and may generate a driving signal by using PPS information recorded in the third table section 740 on the last stage. For example, if the control command of the controller 160 is a rotation start command to speed 1973 PPS, the driving controller 220 may generate a series of driving signals by using PPS information of table indexes in order of table indexes 0-> 1 -> 2 -> 3 -> 4 ... 501 -> 502 -> 503 -> 504 -> 506 -> 526, so that the step motor 150 operates at speeds of 0 PPS -> 5 PPS -> 10 PPS ... 1965 PPS -> 1970 PPS -> 1973 PPS.

FIG. 9 is a block diagram illustrating an image forming apparatus 1000'. According to another exemplary embodiment. In more detail, all elements except for a motor controlling apparatus 200' and step motors 150-1 through 150-4 of FIG. 9 are the same as those of FIG. 1, and thus repeated structures will be omitted for the descriptive convenience.

Referring to FIG. 9, the image forming apparatus 1000' includes a plurality of step motors 150-1, 150-2, 150-3, and 150-4 and the motor controlling apparatus 200'.

The motor controlling apparatus 200' controls the plurality of step motors 150-1, 150-2, 150-3, and 150-4. In more detail, the motor controlling apparatus 200' may include an input unit 210, a driving controller 220, and a driving signal unit 230 which are installed in one ASIC chip.

The motor controlling apparatus 200' receives control signals of the plurality of step motors 150-1, 150-2, 150-3, and 150-4 and generates driving signals respectively corresponding to the plurality of step motors 150-1, 150-2, 150-3, and 150-4 by using one acceleration table. In more detail, the motor controlling apparatus 200' may include a plurality of driving controllers 220 and a plurality of driving signal units 230 so that the number of driving controllers 220 and the number of driving signal units 230 each correspond to the number of step motors, so as to generate driving signals of the plurality of step motors. Alternatively, the motor controlling apparatus 200' may include one driving controller 220 to generate driving signals of the plurality of step motors.

As described above, the image forming apparatus 1000' according to the present exemplary embodiment controls the plurality of step motors by using one acceleration table. Therefore, the number of acceleration tables, which are to be stored in the image forming apparatus 1000', may be reduced.

In the present exemplary embodiment, the motor controlling apparatus 200' controls the same types of four step motors. However, the motor controlling apparatus 200' may generate driving signals of step motors and may simultaneously control a BLDC motor, a DC motor, etc.

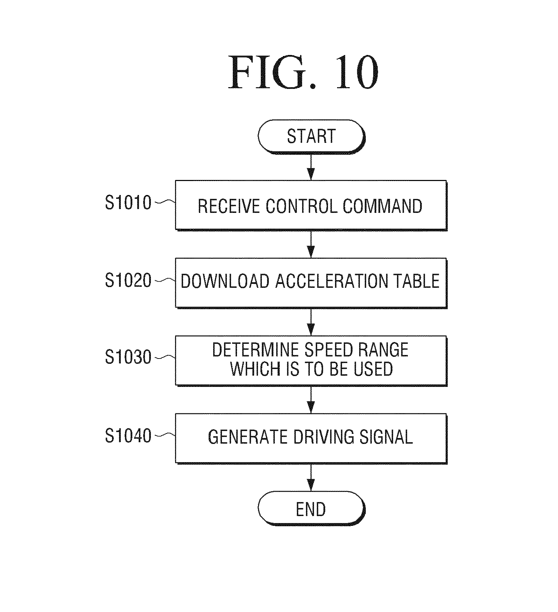

FIG. 10 is a flowchart illustrating a method for controlling a motor according to an exemplary embodiment.

Referring to FIG. 10, in operation S1010, a control command of a step motor is received. Here, the control command may include a control command to a rotation start/stop of the step motor, an acceleration/deceleration of the step motor, a speed command value of the step motor, etc. Also, the control command may be a control command of a plurality of step motors.

In operation S1020, an acceleration table is downloaded. In the present exemplary embodiment, if the control command is received, the acceleration table is downloaded. However, the acceleration table may be pre-downloaded when a motor controlling apparatus is initially driven.

A driving signal of the step motor is generated according to the control command of the step motor. In more detail, in operation S1030, a start speed and an end speed corresponding to a speed change section of the step motor are determined. In operation S1040, a driving signal is generated by sequentially using PPS information from PPS information corresponding to the start speed to PPS information corresponding to the end speed.

If the received control command is a control command of a plurality of step motors, driving signals of the plurality of step motors may be generated by using one acceleration table (in operation S1040).

Therefore, the method of the present exemplary embodiment is to control a step motor by using one acceleration table. Even if a speed of the step motor is to be changed, an additional acceleration table does not need to be downloaded.

Therefore, a time delay, a performance deterioration, etc. may be prevented. Also, in the method of the present exemplary embodiment, a plurality of step motors may be controlled by using one acceleration table. Therefore, a memory space may be prevented from being wasted. The method illustrated in FIG. 10 may be executed by the image forming apparatus 1000 having the structure of FIG. 1 or a motor controlling apparatus having a second structure. Alternatively, the method may be executed by image forming apparatuses or motor controlling apparatuses having other types of structures.

The foregoing exemplary embodiments and advantages are merely exemplary and are not to be construed as limiting the present invention. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An image forming apparatus comprising:
an engine unit which is used to perform an image forming job;
a controller which controls an operation of the engine unit;
a step motor which operates the engine unit;
a storage unit which stores an acceleration table which comprises pulse per second (PPS) information with respect to each of driving speeds of the step motor; and
a driving controller which generates a driving signal of the step motor according to a control command of the step motor which is received from the controller, wherein the driving controller generates the driving signal by using PPS information corresponding to a speed change section of the acceleration table corresponding to the control command.

2. The image forming apparatus as claimed in claim 1, wherein the driving controller determines a start speed and an end speed corresponding to the speed change section of the step motor and generates the driving signal by sequentially using PPS information from PPS information corresponding to the start speed to PPS information corresponding to the end speed.

3. The image forming apparatus as claimed in claim 2, wherein the driving controller generates the driving signal by repeatedly using the each of the PPS information within the start and end speeds by a preset number of times.

4. The image forming apparatus as claimed in any one of claims 1 through 3, wherein the acceleration table comprises a plurality of table indexes and a plurality of pieces of PPS information which respectively match with the plurality of table indexes, wherein the plurality of pieces of PPS information increase or decrease at a preset speed according to the table indexes.

5. The image forming apparatus as claimed in any one of claims 1 through 3, wherein the acceleration table comprises a plurality of table indexes and a plurality of pieces of PPS information which respectively match with the plurality of table indexes, wherein the acceleration table comprises a first table section in which the plurality of pieces of PPS information uniformly increase or decrease at a preset first speed according to the table indexes and a second table section in which the plurality of pieces of PPS information uniformly increase or decrease at a preset second speed according to the table indexes.

6. The image forming apparatus as claimed in claim 5, wherein the driving controller generates the driving signal by using the PPS information of the section table section when the step motor initially and lastly accelerates.

7. The image forming apparatus as claimed in claim 1, wherein the step motor comprises a plurality of step motors, wherein the driving controller generates driving signals of the plurality of step motors.

8. The image forming apparatus as claimed in claim 7, wherein the acceleration table comprises a plurality of table indexes and a plurality of pieces of PPS information which respectively match with the plurality of table indexes, and wherein the acceleration table comprises a first table section in which the plurality of pieces of PPS information uniformly increase or decrease at a preset first speed according to the table indexes, a second table section in which the plurality of pieces of PPS information uniformly increase or decrease at a preset second speed according to the table indexes, and a third table section in which PPS information corresponding to a preset driving speed is recorded.

9. The image forming apparatus as claimed in any one of claims 1 through 8, wherein the driving controller comprises a second storage unit which reads and stores a speed table of the storage unit.

10. A method for controlling a step motor, the method comprising:
receiving a control command of the step motor;
generating a driving signal of the step motor according to the control command; and
providing the generated driving signal to the step motor, wherein the driving signal is generated by using PPS information corresponding to a speed change section of an acceleration table comprising PPS information of each driving speed of the step motor, wherein the speed change section corresponds to the control command.

11. The method as claimed in claim 10, wherein a start speed and an end speed corresponding to the speed change section of the step motor are determined to generate the driving signal by sequentially using PPS information from PPS information corresponding to the start speed to PPS information corresponding to the end speed.

12. The method as claimed in claim 11, wherein the driving signal is generated by repeatedly using each of PPS information within the start and end speeds by a preset number of times.

13. The method as claimed in any one of claims 10 through 12, wherein the acceleration table comprises a plurality of table indexes and a plurality of pieces of PPS information which respectively match with the plurality of table indexes, wherein the plurality of pieces of PPS information increase or decrease at a preset speed according to the table indexes.

14. The method as claimed in any one of claims 10 through 12, wherein the acceleration table comprises a plurality of table indexes and a plurality of pieces of PPS information which respectively match with the plurality of table indexes, wherein the acceleration table comprises a first table section in which the plurality of pieces of PPS information uniformly increase or decrease at a preset first speed according to the table indexes and a second table section in which the plurality of pieces of PPS information uniformly increase or decrease at a preset second speed according to the table indexes, and wherein the driving signal is generated by using PPS information of the second table section when the step motor initially and lastly accelerates.

15. The method as claimed in any one of claims 10 through 12, wherein driving signals of a plurality of step motors are generated by using the one acceleration table, and wherein the acceleration table comprises a plurality of table indexes and a plurality of pieces of PPS information which respectively match with the plurality of table indexes, wherein the acceleration table comprises a first table section in which the plurality of pieces of PPS information uniformly increase or decrease at a preset first speed according to the table indexes, a second table section in which the plurality of pieces of PPS information uniformly increase or decrease at a preset second speed according to the table indexes, and a third table section in which PPS information corresponding to a preset driving speed is recorded.
